## Europäisches Patentamt
## European Patent Office
## Office européen des brevets

(11) Numéro de publication : **0 042 796**
**B1**.

(12)
# FASCICULE DE BREVET EUROPÉEN

(45) Date de publication du fascicule du brevet :
**22.06.83**

(51) Int. Cl.³ : **B 65 G 67/60**

(21) Numéro de dépôt : **81400987.4**

(22) Date de dépôt : **19.06.81**

(54) Appareil de reprise de matières en vrac.

(30) Priorité : **23.06.80 FR 8013865**
**23.12.80 FR 8027274**

(43) Date de publication de la demande :
**30.12.81 Bulletin 81/52**

(45) Mention de la délivrance du brevet :
**22.06.83 Bulletin 83/25**

(84) Etats contractants désignés :
**AT BE DE FR GB IT NL**

(56) Documents cités :
**FR A 526 675**
**FR A 2 263 679**
**GB A 760 747**
**SU A 175 436**
**US A 1 666 985**
**US A 4 033 449**

(73) Titulaire : **Delattre-Levivier**
**16 boulevard Malesherbes**
**F-75008 Paris (FR)**

(72) Inventeur : **Riboulet, Jacques**
**32 avenue des Mésanges**
**F-94360 Bry-sur-Marne (FR)**

(74) Mandataire : **Saint-Martin, René et al**
**CREUSOT-LOIRE 15 rue Pasquier**
**F-75383 Paris Cedex 08 (FR)**

Jouve, 18, rue St-Denis, 75001 Paris, France

Appareil de reprise de matières en vrac

La présente invention concerne un appareil de reprise de matières en vrac plus particulièrement destiné, à titre d'exemple, au déchargement de navires.

On connaît des appareils de déchargement en continu de navires de transport de matières en vrac comme, par exemple, des minerais ou autres matériaux pulvérulents. Ces appareils sont constitués par un portique roulant sur le quai et porteur d'une flèche orientable supportant à son extrémité un élévateur vertical à godets orientable autour de son axe vertical. Lorsque la base de l'élévateur à godets est introduite dans la cale du navire, les matières sont d'abord remontées par l'élévateur puis par une succession de trémies et de transporteurs continus, sont amenées dans l'axe du portique où elles sont finalement déversées sur un transporteur vers leur utilisation ou vers un stockage. De tels appareils ne permettent l'accès direct qu'aux matières situées à l'aplomb des ouvertures de cale ou aux matières qui parviennent dans cette zone par éboulement naturel à partir des zones qui l'entourent. La demande de brevet français 73-04990 publié sous le numéro 2 217 250 décrit un tel appareil.

On connaît des appareils permettant l'accès direct aux matières disposées sous les hiloires. L'appareil décrit dans le brevet français 546 338 comporte un élévateur pourvu d'un bras inférieur oblique qui dévie la chaîne sans fin à godets défilant par ailleurs dans la partie verticale de l'élévateur.

Dans la demande de brevet anglais 2 004 830, l'élévateur vertical est équipé à sa partie inférieure d'un dispositif de chargement continu auxiliaire qui est orientable autour d'un axe horizontal sur cet élévateur vertical. Ce dispositif auxiliaire est constitué de deux chaînes sans fin à godets, l'élévateur vertical comportant une chaîne sans fin à godets indépendante qui transporte la matière se déversant des chaînes à godets du dispositif de chargement auxiliaire.

La présente invention a pour objet un appareil de reprise de matières en vrac du type comportant un élévateur vertical et un dispositif de chargement auxiliaire composé d'une chaine sans fin à godets indépendante de celle de l'élévateur vertical, limitant l'envol des poussières et permettant la vidange de la chaîne à godets de l'élévateur principal. Elle a encore pour but d'éviter les efforts appliqués au dispositif de chargement auxiliaire par les mouvements du navire dus à la houle.

L'invention s'applique à un appareil de reprise de matières en vrac utilisant un élévateur principal à chaine sans fin à godets, orientable autour d'un axe vertical et portant une trémie et associé à un bras de chargement auxiliaire à chaine sans fin à godets indépendante, susceptible d'osciller, sous l'action de moyens moteurs, autour d'un axe parallèle à l'axe du tourteau inférieur de renvoi de l'élévateur principal et disposé de manière à déverser les matières dans ladite trémie. Selon l'invention, l'élévateur principal est entouré à son extrémité inférieure par un carter collecteur dans lequel débouche ladite trémie et qui est muni à sa base d'une ouverture de vidange associée à un fond ouvrant manœuvré par des moyens de commande d'ouverture et de fermeture.

Selon une caractéristique de l'invention, le fond ouvrant est constitué de deux volets oscillants.

Selon une autre caractéristique de l'invention, le bras auxiliaire est muni d'un organe d'appui débordant la surface extérieure décrite par les godets de manière à reposer sur le fond du navire lorsque le bras est incliné.

L'invention sera mieux comprise en se référant à un mode de réalisation particulier donné à titre d'exemple et représenté par les dessins annexés.

La figure 1 montre l'ensemble d'un appareil de déchargement continu de navires conforme à l'invention.

La figure 2 représente cet appareil à plus grande échelle pour montrer la base de l'élévateur vertical et le dispositif de chargement auxiliaire qui lui est associé.

La figure 3 représente une variante de réalisation de la figure 2.

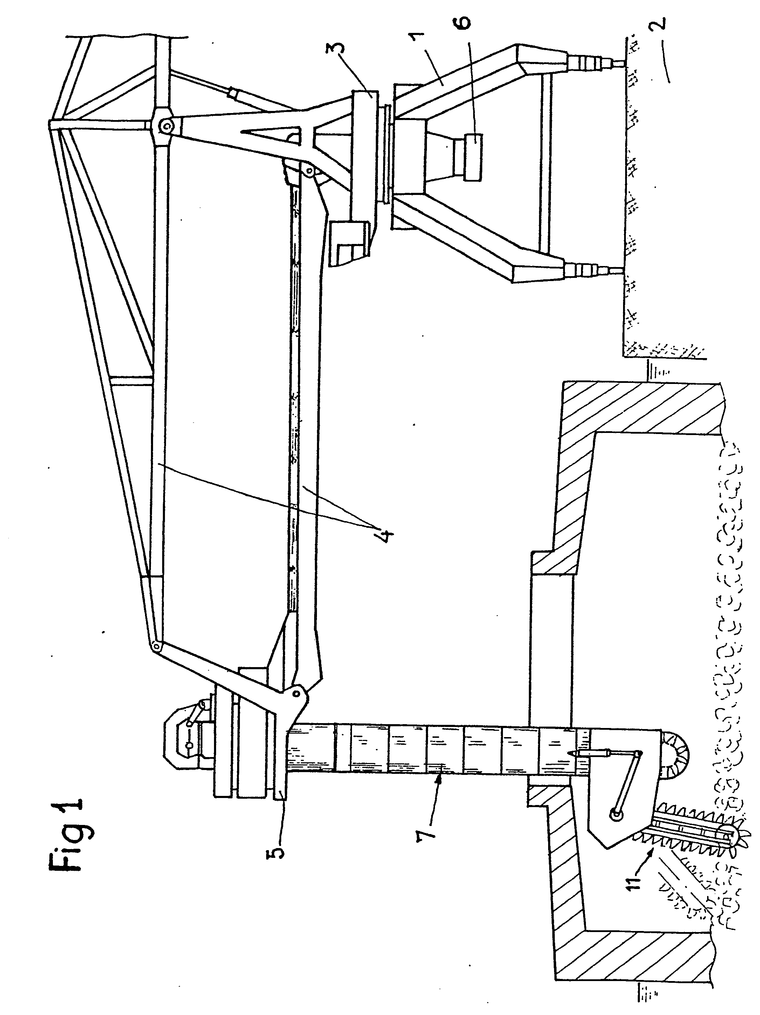

On retrouvera sur la figure 1 les éléments essentiels usuels d'un appareil de déchargement continu comportant un portique 1 roulant sur le quai 2. Un bâti tournant 3 porte une flèche 4 en parallèlogramme permettant de conserver l'horizontalité d'un châssis 5 disposé à son extrémité et ceci quelle que soit l'inclination de la flèche. Le châssis 5 supporte un élévateur vertical à godets 7. De façon usuelle l'élévateur est orientable par rapport au châssis 5 autour d'un axe vertical. Cet élévateur comporte un tourteau inférieur 8 sur lequel s'enroule la chaine à godets 9. Les matières déversées à la partie supérieure de l'élévateur sont reprises par une série de trémies et de transporteurs continus jusque dans l'axe du portique pour aboutir à une trémie de sortie 6. On n'a pas représenté l'évacuation des matières au-delà de la trémie qui peut se faire de façon tout-à-fait usuelle par un transfixe à quai ou par l'intermédiaire d'un transporteur de renvoi latéral solidaire du portique lui-même.

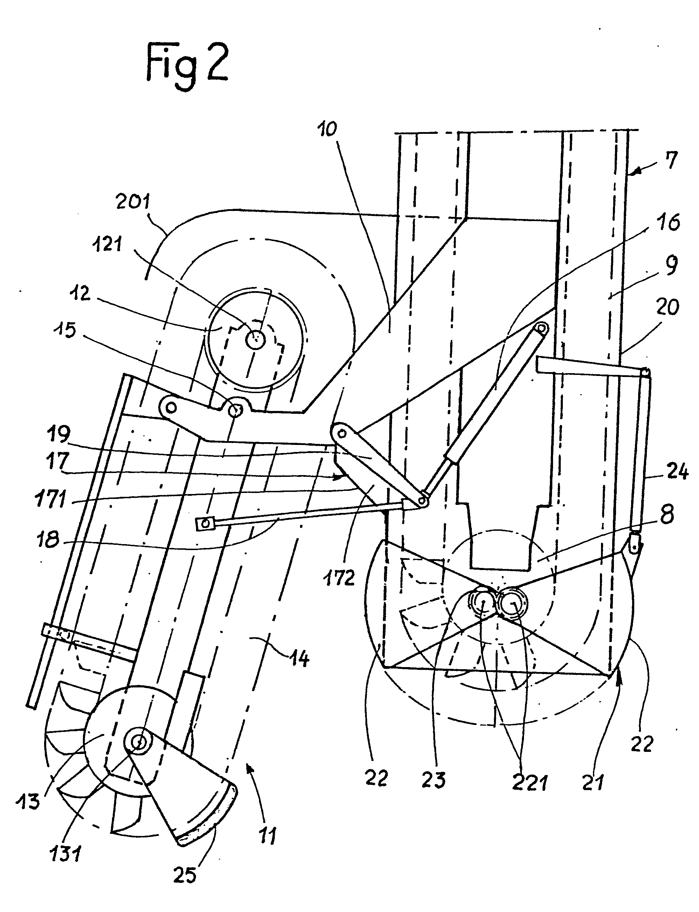

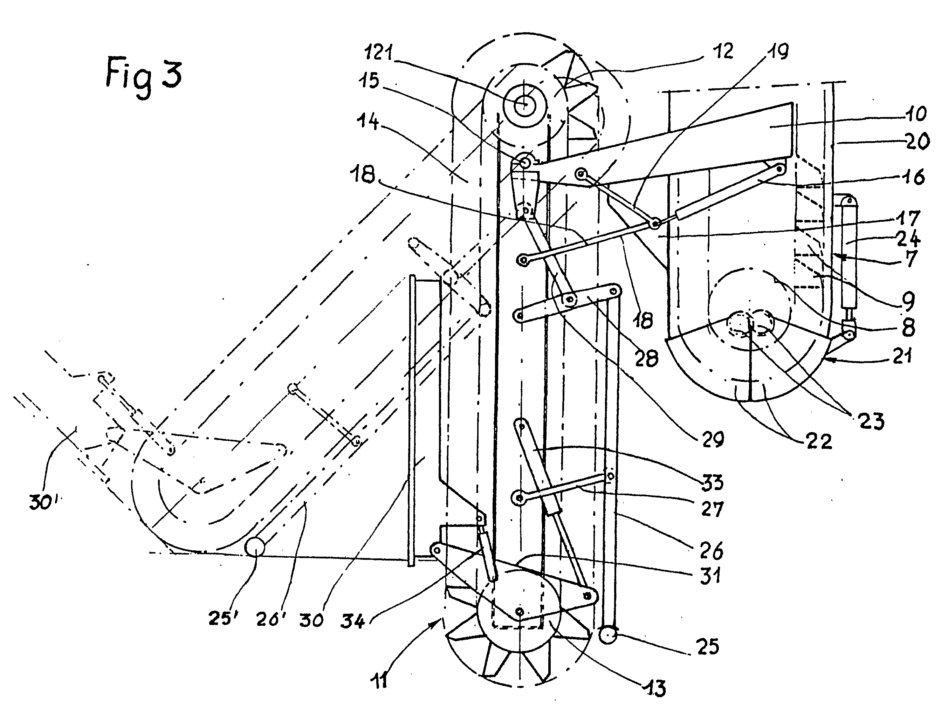

En se référant maintenant aux figures 2 et 3, on verra qu'à sa base, l'élévateur vertical 7 comporte deux consoles 10 fixées de part et d'autre de son ossature longitudinale. Ces consoles 10 servent de support à un bras auxiliaire de chargement 11. Ce bras auxiliaire 11 est constitué par un tourteau supérieur 12 et par un tourteau inférieur de renvoi 13 sur lesquels passe une chaine à godets 14. Ces tourteaux rotatifs sont montés par des axes de rotation 121 et 131 respectivement à chacune des extrémités de la charpente du bras 11. Ces axes 121 et 131 sont horizontaux et parallèles. Un moteur permet l'entrainement du tourteau 12 et par là même de la chaîne à godets 14. Le bras auxiliaire 11 est articulé sur les consoles 10 par l'intermédiaire d'un axe 15 disposé sur l'ossature du bras 11, par exemple entre l'axe 121 du tourteau supérieur et l'axe 131 du tourteau inférieur. L'axe 15 est parallèle aux axes 121 et 131 et à l'axe du tourteau inférieur 8 de l'élévateur principal 7. Les moyens pour faire varier l'inclinaison du bras auxiliaire 11 sont constitués par un vérin 16 dont le corps est articulé sur l'ossature de l'élévateur principal et dont la tige est articulée à une barre de transmission 18 elle-même articulée à son autre extrémité sur l'ossature du bras 11. Une tige de réaction 19 est articulée à une de ses extrémités sur la console 10 et à son autre extrémité à l'articulation entre la barre 18 et la tige du vérin 16.

On pourra noter qu'en faisant varier l'inclinaison du bras 11 au moyen du vérin 16 on pourra faire varier la portée efficace des godets et atteindre ainsi les matières situées sous les hiloires comme on le voit plus particulièrement sur la figure 1.

La commande — électrique ou hydraulique — de la chaîne 14 pourra être prévue à vitesse variable et indépendante de la vitesse de la chaîne 9 de l'élévateur principal 7. On pourra ainsi, en jouant sur les vitesses relatives de la chaîne 14 et de la chaîne 9, assurer une charge à peu près constante de l'élévateur 7 pour des produits de densités différentes, c'est-à-dire assurer un rendement optimal de l'élévateur et de tout l'appareil.

Un carter collecteur 20 forme une chambre dans laquelle loge la partie inférieure de la chaîne à godets 9 de l'élévateur vertical principal. Il forme à la partie inférieure une ouverture rectangulaire de vidange. Ce carter qui a pour rôle de limiter l'envol des poussières et donc la pollution est solidaire de l'ossature de l'élévateur principal et des consoles 10 de support du bras auxiliaire. Une trémie 17, disposée du côté du bras auxiliaire 11 est solidaire du carter. Elle comporte une ouverture de chargement vers le haut et débouche dans le carter 20. Elle est constituée par une tôle inclinée 171 et par des flasques latéraux 172. Les matières déversées en tête par le bras 11 tombent dans l'ouverture de chargement de la trémie pour aboutir dans le carter collecteur. Là elles sont reprises par les godets de l'élévateur 7. Le carter est associé à un fond 21 ouvrant qui, en position fermée, obture l'ouverture inférieure du carter et, en position ouverte, permet la vidange de la chaîne à godets de l'élévateur principal. Ce fond ouvrant est constitué de deux volets oscillants 22 qui sont supportés par l'ossature ou le carter au moyen d'articulations horizontales 221. Chaque volet est constitué par un panneau d'obturation enveloppant un cylindre centré sur l'axe de rotation du volet et réuni par deux bras, en forme de segments, à l'axe de rotation. Les deux volets pivotent autour de leurs axes de rotation respectifs en effectuant des rotations égales et opposées de manière à rester constamment symétriques par rapport au plan vertical médian de l'élévateur.

Les mouvements de rotation sont assurés par deux engrenages 23 solidaires des volets et qui engrènent l'un avec l'autre. Lorsque les deux volets sont jointifs ils ferment l'ouverture inférieure du carter. Lorsqu'ils sont relevés et écartés l'un de l'autre, les deux volets dégagent l'ouverture de vidange. La commande de fermeture et d'ouverture du fond est réalisée par un vérin 24 articulé d'une part à l'ossature de l'élévateur et articulé d'autre part à l'un des volets 22.

Sur la figure 2, le fond ouvrant est en position d'ouverture, la position de fermeture étant représentée en pointillés. Le fond ouvrant qui fonctionne à l'ouverture et à la fermeture à la manière d'une benne ou d'une trappe est commandé depuis la cabine de conduite de l'appareil.

Le bras auxiliaire comporte, à la partie inférieure, un organe d'appui 25 de type sabot ou galet qui est situé à l'extérieur de la surface extérieure décrite par les godets. Cet organe d'appui évite que les godets de la chaîne 14 viennent en contact avec le fond.

Dans le mode de réalisation de la figure 2 le sabot 25 est solidaire du bras 11. Il est articulé par des bras latéraux autour de l'axe du tourteau inférieur 13 et il est fixé en position par un système de fixation et de réglage de manière à déborder, vers le bas, le plan horizontal tangent à la surface extérieur décrite par les godets.

Dans le mode de réalisation de la figure 3, le sabot 25 est fixé à l'extrémité inférieure d'une tige d'appui 26. Cette tige reste parallèle au bras 11 au moyen de deux bielles de liaison 27 et 28 de même longueur, chacune articulée à l'une de ses extrémités sur la charpente du bras et à l'autre sur la tige 26 de façon à rester constamment parallèle. Le dispositif à parallèlogramme est d'autre part relié à une pièce fixe solidaire des consoles 10 par l'intermédiaire d'une tige support 29 articulée à l'une de ses extrémités sur ladite pièce fixe et à son autre extrémité sur la bielle de liaison 28. Lorsque le bras 11 est en position inclinée le parallèlogramme se déforme pour amener la tige d'appui vers la position 26', l'organe d'appui venant alors reposer en 25' sur le fond du navire pour empêcher le contact entre les godets de la chaîne 14 et le fond. Le dispositif à parallèlogramme est déterminé de manière que, quelle que soit la position inclinée du bras 11, le sabot 25 déborde, vers le bas, le plan horizontal tangent à la surface extérieure décrite par les godets.

Lorsque le navire subit des mouvements tels que ceux provoqués par la houle, ces mouvements sont transmis au bras auxiliaire par l'intermédiaire de l'organe d'appui ce qui provoque simplement une oscillation du bras autour de son axe d'articulation.

Un élément élastique comme par exemple un accumulateur oléopneumatique est prévu dans le circuit d'alimentation hydraulique du vérin 16. Avec l'organe d'appui 25 et l'élément élastique du circuit du vérin 16, les efforts dus aux mouvements verticaux du navire et appliqués à l'extrémité inférieure du bras 11 se traduiront par une rotation élastique autour de l'axe 15 réduisant ainsi les risques d'avaries.

Dans le cas où l'on prévoit un déplacement horizontal de l'appareil pour faciliter le remplissage des godets 14 du bras auxiliaire on pourrait encore améliorer celui-ci par l'action d'une lame de raclage. Cette lame de raclage repérée 30 est articulée sur le bras 11 par l'intermédiaire d'un balancier 31 et peut être mise en position de travail 30' sur le talus d'éboulement de la matière en vrac grâce aux vérins 33 et 34 qui permettent de régler respectivement la position du balancier 31 par rapport au bras 11 et de la lame 30 par rapport au balancier 31.

La protection est complétée par un carter 201 qui enveloppe la partie supérieure du bras 11.

Les bords des volets oscillants 22 sont munis de joints d'étanchéité pour éviter les fuites de matières qui ont une certaine fluidité.

Le fonctionnement de l'appareil va maintenant être expliqué.

Les matières reprises par les godets de la chaîne 14 du bras auxiliaire se déversent par l'intermédiaire de la trémie 17 dans le carter collecteur 20. Le carter collecteur associé au fond 21 en position fermée isole l'élévateur et évite la pollution et constitue un ensemble fermé et relativement étanche de type trémie qui permet la reprise des matières par les godets de la chaine 9 de l'élévateur principal.

L'ouverture du fond 21 permet la vidange de l'élévateur principal en cas d'incident.

Le dispositif d'appui 25 qui est disposé du côté opposé au bord d'attaque des godets du bras auxiliaire 11 c'est-à-dire du côté de l'élévateur 7 permet d'éviter tout contact entre les godets à la partie basse de leur parcours et le fond du navire puisque ce dispositif reste toujours à un niveau un peu inférieur aux godets.

Par le positionnement de l'axe 15 entre les axes des tourteaux, la partie du bras 11 portant le tourteau 12 située au-dessus de l'axe 15 se rapproche de la trémie 17 si bien que la partie de la chaîne à godets où s'effectuent les déversements des matières vers la trémie 17 est déplacée dans la zone au-dessus de cette trémie. Ce rapprochement de la zone de déversement vers la trémie permet de compenser le fait que l'angle de déversement des matières glissant sur le fond incliné des godets diminue en même temps l'angle d'inclinaison de ces fonds de godets.

L'invention ne se limite pas au mode de réalisation qui vient d'être décrit mais elle comporte au contraire toutes les variantes dans le cadre défini par les revendications. L'invention n'est pas limitée au domaine de déchargement pour navires mais elle s'applique à tout appareil de reprise de matières en vrac quel que soit son domaine d'application.

L'ensemble de moteur de commande de l'inclinaison du bras auxiliaire pourrait être plus complexe que celui qui a été décrit et comporter plusieurs vérins agissant simultanément.

## Revendications

1. Appareil de reprise de matières en vrac utilisant un élévateur principal à chaîne sans fin à godets, orientable autour de son axe vertical, portant une trémie (17) et associé à un bras auxiliaire de chargement (11) à chaîne sans fin à godets (14) indépendante, susceptible d'osciller autour d'un axe (15) parallèle à l'axe du tourteau inférieur (8) de renvoi de l'élévateur principal et disposé de manière à déverser les matières dans ladite trémie (17), caractérisé par le fait que l'élévateur principal (7) est entouré à son extrémité inférieure par un carter collecteur (20) dans lequel débouche ladite trémie et muni à sa base d'une ouverture de vidange associée à un fond ouvrant (21) manœuvré par des moyens de commande (24) d'ouverture et de fermeture.

2. Appareil de reprise selon la revendication 1, caractérisé par le fait que le fond ouvrant (21) est constitué de deux volets oscillants (22).

3. Appareil de reprise selon l'une quelconque des revendications précédentes, caractérisé par le fait que le bras auxiliaire est muni d'un organe d'appui (25) débordant la surface extérieure décrite par les godets de manière à reposer sur la surface de stockage des matières lorsque le bras est incliné.

## Claims

1. Apparatus for recovering bulk materials, using a main endless-chain bucket elevator which can be oriented about its vertical axis and carries a hopper (17) and which is associated with an auxiliary loading arm (11) which has an independent endless bucket chain (14) and which is capable of oscillating about an axis (15) parallel to the axis of the lower transfer tumbler (8) of the main elevator and is arranged in such a way as to discharge the materials into the said hopper (17), characterised in that the main elevator (7) is surrounded at its lower end by a collecting housing (20) into which opens the said hopper and which is provided at its base with an emptying orifice associated with an opening bottom (21) operated by means (24) for controlling opening and closing.

2. Recovery apparatus according to Claim 1, characterised in that the opening bottom (21) consists of two oscillating flaps (22).

3. Recovery apparatus according to either one of the preceding claims, characterised in that the auxiliary arm is provided with a bearing member (25) which projects beyond the outer surface described by the buckets, in such a way as to rest on the surface for storage of the materials, when the arm is inclined.

## Ansprüche

1. Aufnahmevorrichtung für Schüttgut unter Verwendung eines Haupthöhenförderers mit einer endlosen Becherkette, der um seine vertikale Achse ausrichtbar ist, einen Bunker (17) trägt und einem Ladehilfsarm (11) zugeordnet ist, der eine

4

unabhängige endlose Becherkette (14) aufweist und um eine Achse (15) verschwenkbar ist, die parallel zur Achse der unteren Rückführungs- bzw. Turasscheibe (8) des Haupthöhenförderers verläuft, welche Becherkette so angeordnet ist, daß sie das Schüttgut in den Bunker (17) entleert, dadurch gekennzeichnet, daß der Haupthöhenförderer (7) an seinem unteren Ende von einem Sammelgehäuse (20) umgeben ist, in welches der Bunker (17) einmündet, und an seiner Basis mit einer Entleerungsöffnung versehen ist, der eine Bodenklappe (21) zugeordnet ist, welche von einer Betätigungseinrichtung (24) zum Öffnen und Schließen steuerbar ist.

2. Aufnahmevorrichtung nach Anspruch 1, dadurch gekennzeichnet, daß die Bodenklappe (21) von zwei Schwenkflügeln (22) gebildet ist.

3. Aufnahmevorrichtung nach einem der vorhergehenden Ansprüche, dadurch gekennzeichnet, daß der Hilfsarm mit einem Stützelement (25) versehen ist, das über die äußere, von den Bechern überstrichene Fläche so weit hinausragt, daß es bei geneigtem Hilfsarm auf der Lagerfläche für das Schüttgut aufliegt.

Fig 1

# Fig 2

Fig 3

0 042 796